# EUROPEAN PATENT SPECIFICATION

(11) **EP 4 485 050 B1**
(45) Date of publication and mention of the grant of the patent: **28.10.2026**
(21) Application number: 23182423.6
(22) Date of filing: 29.06.2023
(51) Int. Cl.: G02C 7/04, G02C 11/00

(54) **CONTACT LENS STRUCTURE**
KONTAKTLINSENSTRUKTUR
STRUCTURE DE LENTILLE DE CONTACT

(43) Date of publication of application: 01.01.2025
(73) Proprietor: Azalea Vision BV, 9052 Ghent (BE)
(72) Inventor: Brans, Toon, 9052 Ghent (BE)
(74) Representative: AWA Sweden AB

(56) References cited:
- WO-A1-2007/002671
- WO-A1-2018/078420
- US-A1- 2018 224 671
- US-A1- 2018 299 699
- US-A1- 2021 072 561

## Description

### TECHNICAL FIELD

The present disclosure relates to the field of optics, and more particularly to contact lens structures.

### BACKGROUND

Smart contact lenses are contact lenses which embed electronic components and may also include other materials to add functionality. It is a known fact that contact lenses need to be oxygen permeable, since the cornea is a tissue oxygenated by interaction with its environment. The use of contact lenses with insufficient oxygen permeability may result in corneal oedema which manifests in symptoms as irritation, blurry vision, red eyes, etc.

The electronic components and materials embedded in smart contact lenses are typically not oxygen permeable. When these smart components take up a relatively large surface area, a conventional contact lens embedding these components does not provide adequate oxygen permeability and cannot be used with patients.

Further, electronic components in smart contact lenses are typically small, and ring shaped or curved to mimic the shape of a conventional contact lens, so that these components can be fit in a typical sphere-like contact lens design. The approach in which the shape of a conventional lens is used to embed the platform in a Rigid Gas Permeable (RGP) material does not work when a large flat component is introduced within the contact lens, because the resulting contact lens would be too thick and too heavy for the patient's comfort and would reduce the oxygen permeability of the lens significantly.

Some other approaches have been disclosed to increase oxygen permeability of smart contact lenses or scleral lenses. Patent document US9039171B2 introduces a contact lens assembly consisting of a proximal layer formed from a gas-permeable material, a distal layer with an optical element, an air cavity disposed between the proximal layer and the distal layer, and a gas transport region surrounding the air cavity. In patent document US10095051B2, the approach followed is to provide air shafts through the non-permeable core of the contact lens, thereby connecting the environment directly with the tear fluid in between the scleral lens and the cornea. Patent document EP3893045A2 provides a scleral lens with a plurality of annularly distributed fenestrations in its optical zone thereof, and two or more pockets in a pocket annular zone on a posterior surface of the optical zone. Another approach is the one followed in patent document US8087777, wherein microchambers are provided in the posterior surface of the scleral lens, in the optical zone. In patent document WO2020097205A1 an outer air cavity and an inner air cavity are provided around the impermeable core of the contact lens and an air path is provided through the core to connect the two cavities. Finally, in patent document US9869884B2 the water transmissibility maximum and oxygen permeability minimum are achieved by a predetermined lens thickness of a single lens material or by the use of two or more material layers. Another oxygen permeable contact lens structure is disclosed in US2018/0224671A1.

Thus, there is a need for a contact lens structure which may be used for a smart platform, yet allowing sufficient oxygen permeability and desired optical properties.

### SUMMARY OF THE INVENTION

The present disclosure solves the drawbacks of the existing solutions with a contact lens structure which embeds a flat component while maintaining the oxygen permeability.

The invention is defined by the appended independent claims, with embodiments being set forth in the appended dependent claims, in the following description and in the drawings.

According to a first aspect of the invention, a contact lens structure is provided comprising an enclosure having an anterior layer and a posterior layer; and an air chamber fully located within the enclosure between the anterior layer and the posterior layer of the enclosure. The contact lens structure further comprises a flat component arranged at least partly within the air chamber in an optical zone of the contact lens structure. A back vertex power of the contact lens structure results from the optical power of the radius of curvature of at least the anterior layer, the posterior layer and the air chamber. The anterior layer comprises an anterior surface, which anterior surface comprises a flat portion having a radius of curvature that is in absolute value larger than 20 mm

The contact lens structure embeds a flat component, such as a flat component of a smart contact lens, while still being comfortable for the patient and maintaining oxygen permeability. The flat component may be an essentially flat component. By flat component it may be meant a component with an essentially flat extension in one plane. The flat component may have a top surface and a bottom surface, and these surfaces may to at least a majority (>50%) of the extension of the flat component be in parallel, or at least 70%, at least 80%, at least 90% or 100% of the extensions of the two surfaces may be in parallel. This flat component, typically large and located centrally within the contact lens structure, may be hosted within the air chamber which typically at least may cover the optical zone of the contact lens structure and enable flow of air adjacent the flat component. The flat component may also be bordering the anterior layer. The flat component may be a flat electronics component.

The ability of embedding a flat component may provide functionalities of a smart contact lens hosting the component. A flat component being embedded within the contact lens structure may be advantageous since the manufacturability thereof is simplified. It is easier to manufacture a flat component than a curved one. Further, the flat component may not have to be made bespoke to a specific human person.

The flat component may normally be centrally located within the air chamber, and in the optical zone of the contact lens structure. The presence of a large central flat component in the contact lens structure would preclude oxygen flow if it were not for the presence of the air chamber which allows oxygen to flow within the air chamber along the flat component. The flat component may be an essentially flat component. The oxygen present in the air chamber may be distributed in a uniform way across the extension of the air chamber. Oxygen may thereby reach the eye of a user via the air chamber and through the air permeable posterior layer over the entire optical zone. Oxygen may enter into the air chamber from the environment through the air permeable anterior layer at locations outside the optical zone. The air chamber then may provide a uniform distribution of oxygen over the entire optical zone, through the posterior layer to the eye.

By being arranged at least partly within the air chamber it may be meant that the flat component may be arranged to a posterior surface of the anterior layer, extending partly into the air chamber. Hence, the flat component may be arranged at the interface between the anterior layer and the air chamber.

The posterior layer may have a posterior surface being curved, essentially following a shape of a human eye. The posterior surface may, when in use on a human eye, be facing the eye. The posterior layer may have an optical power attributing to the optical power of the contact lens structure.

The anterior layer may be understood as the portion of the enclosure comprised within the outermost surface of the enclosure and the anterior surface of the air chamber. The anterior layer may comprise or be made of contact lens material. The anterior layer may have an optical power attributing to the optical power of the contact lens structure, and in turn, of a smart contact lens comprising such contact lens structure.

The way the optical power of the contact lens structure is provided in the present invention, or the back vertex power being determined, may allow for more flexibility in defining the radii of curvature of the components in the optical zone, which may be used to reduce the mass and central thickness of the contact lens structure, thereby to increase patient comfort. In general, the radius of curvature of the anterior surface of the proposed contact lens structure may be significantly larger than the anterior radius of curvature typically encountered in contact lenses. This may be due to the air chamber being enclosed in the enclosure.

The anterior layer comprises an anterior surface comprising at least a flat portion or an essentially flat portion. The flat portion of the anterior surface of the enclosure may allow the essentially flat component to be placed within the air chamber adjacent or even attached to the (essentially) flat portion. In turn, this configuration wherein the flat component is provided in the outermost position within the air chamber, may be advantageous because the total weight and material of the contact lens structure may be reduced. The presence of the air chamber may provide that only a small curvature (i.e. a large radius of curvature) may be needed to achieve the desired refractive properties of the lens. The weight reduction may therefore be a result of the presence of the air chamber, and the small volume of the anterior layer of the enclosure resulting from the small curvature of the anterior surface.

The flat portion may have a diameter of 5 mm to 9 mm. The flat portion may in some embodiments extend over substantially the whole flat component.

The optical power or back vertex power, of the contact lens structure may be provided by the anterior layer and the posterior layer of the enclosure, especially the flat portion or essentially flat portion of the anterior surface.

In some embodiments, a radius of curvature of the flat portion of the anterior surface may be at least two times larger than a radius of curvature of a front surface of a standard contact lens. That is, the radius of curvature of the essentially flat portion is much larger than the radius of curvature of the outermost surface of any standard contact lens, which radius of curvature may be in the range of 6 mm to 10 mm. The radius of curvature of the essentially flat portion is, in absolute value, larger than 20 mm. The radius of curvature of the essentially flat portion may be larger than other parts of the anterior surface. Such other parts may be parts radially outside the flat portion, and/or zones radially outside the optical zone of the contact lens structure. Such zone or zones may be a transition zone and/or landing zone as further discussed below.

In some embodiments, the contact lens structure may comprise a transition zone and/or a landing zone, wherein the transition zone and the landing zone are zones radially outside the optical zone, and wherein the flat portion of the anterior surface may have a radius of curvature larger than portions of the anterior surface at the transition zone and/or landing zone.

In some embodiments, the back vertex power of the contact lens structure may be dependent on the curvature (radius of curvature) of the flat or essentially flat portion.

In some embodiments, enclosure may be completely made of contact lens material, such as any commercially available contact lens materials.

In some embodiments, the posterior layer of the enclosure may have a posterior surface, which may be curved essentially following a shape of a human eye. The posterior surface may have a radius of curvature of between 6 and 10 mm.

In certain embodiments, the air chamber may be located centrally within the enclosure. This configuration provides symmetry, which is especially appropriate for the specific application of contact lenses.

In some embodiments, the anterior layer may have a central thickness between 100 µm and 800 µm. Having an anterior layer with such range of thicknesses may enable the contact lens structure with a wide range of optical power by enabling a range of radii of curvature of the anterior layer, at least at the optical zone of the contact lens structure. Said thickness of the anterior layer may be provided at least at the optical zone of the contact lens structure.

In some embodiments, the air chamber may cover at least the optical zone of the contact lens structure, and in some embodiments also at least a portion of a transition zone of the contact lens structure, thereby improving oxygen permeability. The transition zone may be defined as a zone radially outside and next to the optical zone of the contact lens structure.

In some embodiments, the air chamber may also cover a portion of a landing zone of the contact lens structure, which may further improve overall oxygen permeability of the contact lens structure. The landing zone may be defined as a zone radially outside the optical zone and at a radial end of the contact lens structure, and/or radially outside a transition zone of the contact lens structure.

In some embodiments, the air chamber may be a single air chamber, which may improve oxygen transportation within the contact lens structure. Further, a single air chamber may enable having a large flat component, which may be necessary in certain applications, such as when the flat component is an LCD.

In some embodiments, the air chamber may be dimensioned to cover a solid angle of between 0.5*π and 0.9*π, preferably between 0.6*π and 0.8π, and more preferably around between 0.65*π and 0.7*π viewed from the centre of curvature of the posterior surface. In this way, the air chamber may be guaranteed to cover at least a standard complete cornea of a human eye. It should be considered that a standard diameter of a cornea is around 11-13 mm for male Caucasian humans, and around 10.5-12 mm for female Caucasians, both adults. An ethnicity bias and age may also be accounted for since the standard diameters in kids are smaller. The solid angle may provide a conic angle that define the air chamber's extension along the curvature of the contact lens structure.

In some embodiments the contact lens structure may comprise a permeability zone of the anterior layer. The permeability zone may be formed as a portion of the anterior layer outside the flat component and adjacent to the air chamber. At the permeability zone, oxygen may transport through the air permeable anterior layer to the air chamber. The permeability zone may be substantially outside the optical zone. In a radial direction, the permeability zone may end where the air chamber ends. The permeability zone may be outside the portion of the anterior layer that covers the flat component. The permeability zone may be arranged adjacent the optical zone. In some embodiments, the permeability zone may extend at the anterior layer from the radial end of the flat component along the radial extension of the air chamber.

.In some embodiments, the contact lens structure comprises a component platform which comprises the flat component. The component platform may further comprise an annular component portion extending radially outside the flat component. The component platform may comprise at least one opening between the annular component portion and the flat component. The opening in the component platform may form a permeability zone of the anterior layer, through which oxygen may transport to the air chamber. The annular portion may be arranged in the air chamber, adjacent the anterior layer, similarly as the flat component. The component platform may have a radial extension corresponding to the radial extension of the air chamber. With the component platform, the permeability zone may extend at the anterior surface from the radial end of the flat component to a radial inner edge of the annular component portion.

In some embodiments, the contact lens structure may further comprise a component platform which comprises the flat component and an annular component arranged radially outside the flat component. At least one opening may be formed between the flat component and the annular component, through which at least one opening oxygen may be configured to reach the air chamber through the anterior layer. The component platform may be air impermeable. The at least one opening between the flat component and the annular component may enable oxygen to reach the air chamber through the air permeable anterior layer. The component platform may further comprise connecting members extending between the flat component and the annular component. Between the connecting members said at least one opening may be formed.

In some embodiments, the flat component may be arranged with a distance to the posterior layer, through the air chamber, at vertex of curvature of the posterior surface of the posterior layer of between 20 and 200 µm. The flat component is arranged at least partly within the air chamber in the optical zone. Further, the flat component may be arranged adjacent to the anterior layer. The air chamber thereby extends along the flat component between the flat component and the posterior layer. The distance between the flat component (i.e. the surface of the flat component facing the posterior layer) and the posterior layer (i.e. the surface of the posterior layer facing the air chamber) may be between 20 and 200 µm. This distance may be at the vertex of curvature of the posterior surface, providing the smallest distance between the flat component and the posterior layer along the flat component's extension. The distance is through the air chamber, and may thereby set the thickness of the air chamber at the vertex of curvature of the posterior surface.

The contact lens structure according to any of the embodiments may be applied to RGP, scleral and/or corneal contact lenses.

The different aspects and embodiments defined in the foregoing may be combined with one another, as long as they are compatible with each other.

Additional advantages and features of the present disclosure will become apparent from the detail description that follows and will be particularly pointed out in the appended claims.

### BRIEF DESCRIPTION OF THE DRAWINGS

To complete the description and in order to provide for a better understanding of the present disclosure, a set of drawings is provided. Said drawings form an integral part of the description and illustrate one or more embodiments, which should not be interpreted as restricting the scope of the disclosure, but just as an example of how the present disclosure can be carried out. The drawings comprise the following figures:
Figure 1 shows a cross-section view of a contact lens structure according to an embodiment of the invention.
Figure 2 shows a cross-section view of a contact lens structure according to an embodiment of the invention.
Figure 3 shows a perspective view of a component platform according to an embodiment of the invention.
Figure 4 schematically shows a conventional scleral lens.
Figure 5 schematically shows a conventional scleral lens and a contact lens structure according to an embodiment of the invention, both embedding a flat component.
Figure 6 shows a sectional view of a contact lens structure according to an embodiment of the invention
Figure 7 shows a cross-section view of a contact lens structure according to an embodiment of the invention.

### DESCRIPTION OF PREFERRED EMBODIMENTS

The following description is not to be taken in a limiting sense but is given solely for the purpose of describing the broad principles of the present disclosure.

The contact lens structure embeds a component that is relatively large while maintaining the oxygen permeability. The contact lens structure has a significantly smaller central thickness and overall mass than a standard contact lens having the same application, making it comfortable to wear for the patient. Moreover, as it will be explained in the following, the contact lens structure may be shaped such that it provides a correction for myopia or hyperopia, astigmatism and higher order aberrations.

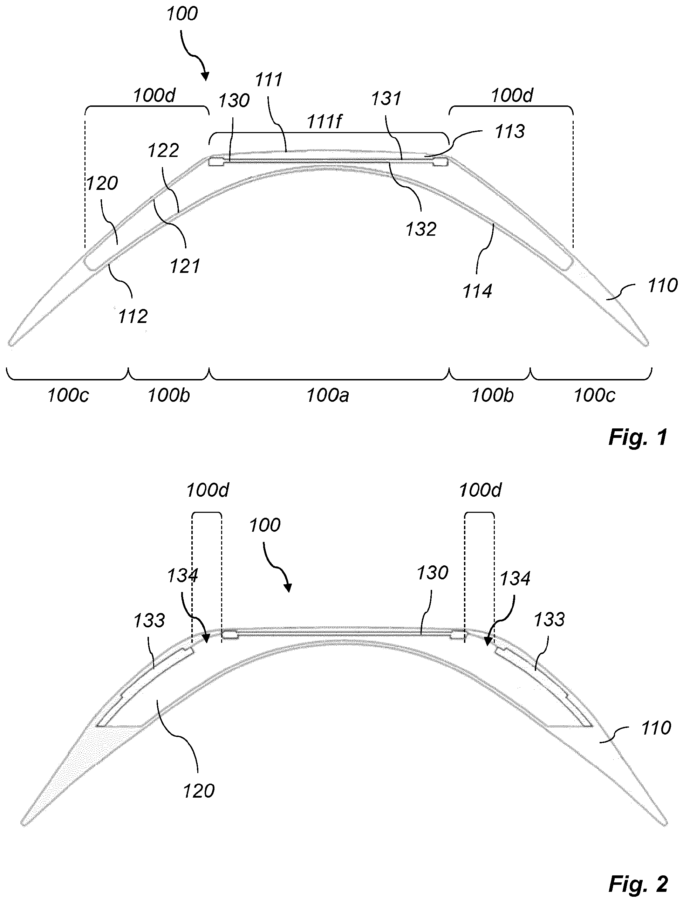

Figure 1 illustrates a contact lens structure 100. The example shown in this Figure 1 is a scleral contact lens. The contact lens structure 100 comprises an enclosure 110 composed of a rigid gas permeable (RGP) material and a single air chamber 120. A smart platform having a large central flat component 130 is embedded in the contact lens 100.

In the present disclosure, terms such as "outer", "outermost", "over", "top", "up" and "anterior" refer to the direction away from the eye of a patient wearing the contact lens, while "inner", "innermost", "under", "bottom", "down" and "posterior" refer to the direction of the patient's eye.

Figure 1 provides a definition of the different surfaces of the contact lens structure 100. These surfaces can be defined as:
- an enclosure anterior surface 111 and an enclosure posterior surface 112 corresponding to the outermost and innermost surfaces of the enclosure 110, respectively;
- an air chamber anterior surface 121 and an air chamber posterior surface 122 corresponding to the outer and inner surfaces of the air chamber 120, respectively.

Additionally, three zones or areas of the contact lens 100 have been distinguished in Figure 1, as commonly done with scleral lenses: an optical zone 110a, which essentially coincides with the centre portion of the contact lens, and where light is collected, altered or generated and sent to the retina of the eye; a landing zone 100c, which essentially coincides with the outer portion or periphery of the contact lens, and where the contact lens touches the sclera of the eye; and a transition zone 100b, connecting the optical zone 100a to the landing zone 100c.

The contact lens structure 100 further defines a permeability zone 100d. This permeability zone 100d comprises a zone of the anterior layer 113 that is free of electronic components (e.g. the flat component), and therefore contributes to the flow of oxygen within the contact lens, to the air chamber 120.

The anterior surface 111 has a flat portion 111f having a larger radius of curvature than the other parts of the anterior surface 111. The flat portion 111f extends over the whole, or at least substantially the whole, optical zone 100a. The flat portion 111f extends over the whole, or at least substantially the whole, flat component 130. The flat portion 111f is shaped to provide the desired back vertex power of the contact lens structure 100. The radius of curvature of the flat portion 111f is in absolute value larger than 20 mm. Due to the larger radius of curvature of the flat portion 111f compared to a common contact lens structure having the substantially the same radius of curvature for the entire enclosure, the present contact lens structure 100 enables a compact design of the contact lens structure 100, with an embedded flat component 130 and a desired back vertex power essentially determined by the radius of curvature of the flat portion 111f of the anterior surface 111. The back vertex power may also be provided with the shape of the flat portion 111f in combination with the air chamber 120 and/or the posterior surface 112.

The air chamber 120 is comprised within the enclosure 110 and is essentially located in the centre of the contact lens structure 100, covering the optical zone 110a and at least a portion of the transition zone 100b. In some embodiments the air chamber 120 further extends into a portion of the landing zone 100c. The air chamber 120 is comprised within an anterior layer 113 and a posterior layer 114 of the enclosure 110. Thus, the anterior layer 113 is comprised within the enclosure anterior surface 111 and the air chamber anterior surface 121; the posterior layer 114 is comprised within the enclosure posterior surface 112 and the air chamber posterior surface 122.

In this embodiment, the smart platform only comprises the flat component 130, which is located centrally in the contact lens 100 and, as just explained, is adjacent and/or attached to a posterior surface of the enclosure's anterior layer 113. The smart platform can be smaller, equal, or larger than the optical zone 100a of the contact lens structure 100. A typical dimension of this smart platform (flat component 130) is between 1 and 10 mm in diameter. The flat component 130 also has an anterior or outer surface 131 and a posterior or inner surface 132.

The flat component 130 can be a device modulating the light coming into the optical zone of the contact lens structure, e.g. a switchable spectral filter, an artificial iris, or a switchable Fresnel lens. The flat component 130 of the smart platform can also be a display generating light, e.g. a microLED display, or a combination of both, e.g. a transparent OLED display with an active modulator. The flat component 130 can be the sole component embedded in the contact lens 100 as in the example of Figure 1.

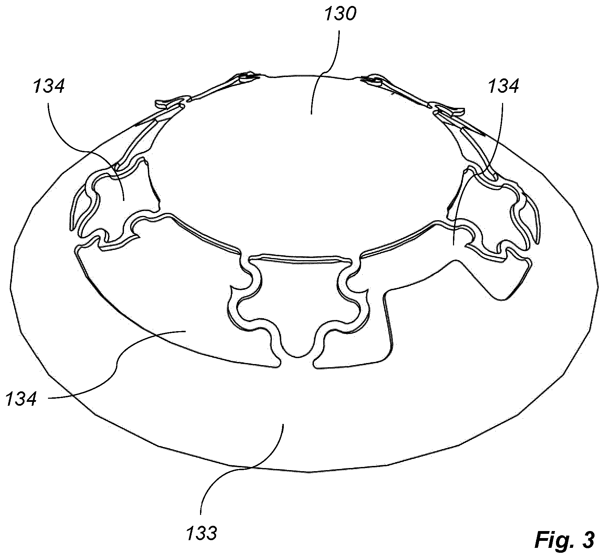

It is also possible that the smart platform comprises not only the central flat component 130 but also other components, such as other electronics which are not necessarily entirely flat. This is schematically shown in Figure 2. An example embodiment of a smart platform or platform component is illustrated in fig. 3. The platform component comprises the flat component 130 and an annular component 133 The annular component extends radially outside the flat component 130. There may be at least one opening 134 between the flat component 130 and the annular portion 133. The at least one opening 134 may provide permeability zone(s) 100d through which oxygen may move through the anterior layer 113 to reach the air chamber 120. The air chamber 120 and the platform comprising the flat component 130 and the annular portion 133 may have a mutual radial extension. Between the flat component 130 and the annular component 133 there may be a plurality of connecting members 135, connecting the flat component 130 with the annular component 133, and between which the openings 134 are formed.

The air chamber 120 has several functions, which determine the dimensions of the air chamber. Firstly, the air chamber serves as a highly permeable oxygen reservoir that compensates for the oxygen non-permeability of the flat component 130. The air chamber 120 also allows for the lens geometry that is needed to embed the flat component 130. It is known that the diffusion of oxygen in air is more than 1000 times higher than in the most oxygen-permeable RGP materials. Therefore, the air chamber 130 can be considered as an oxygen isobaric volume that poses a negligible barrier to the oxygen permeability. As a result, the air chamber 120 allows to alter the geometry of the contact lens structure 100 so as to embed a large flat component without compromising the oxygen permeability. Additionally, since the air chamber 120 in this case is dimensioned to cover the complete corneal tissue, the air chamber enables the central corneal tissue of the contact lens' wearer to be oxygenated, despite the presence of the oxygen-impermeable flat component 130 covering the eye tissue. This is due to the fact that the contact lens structure 100 comprises the permeability zone 100d, through which oxygen is transported from the enclosure's anterior layer 113 towards the enclosure's posterior layer 114. This oxygen transport would not be possible in the absence of the air chamber 120 since the oxygen permeability of the RGP material is too low to allow for efficient oxygen transport within the contact lens. Therefore, the absence of the air chamber 120 would result in severe corneal oedema when a large, oxygen-impermeable component such as the smart platform covers the corneal tissue. The flat component 130 (and optional other electronics) may comprise one or more openings 134 or perforations to enable oxygen transport through the otherwise oxygen-impermeable flat component 130.

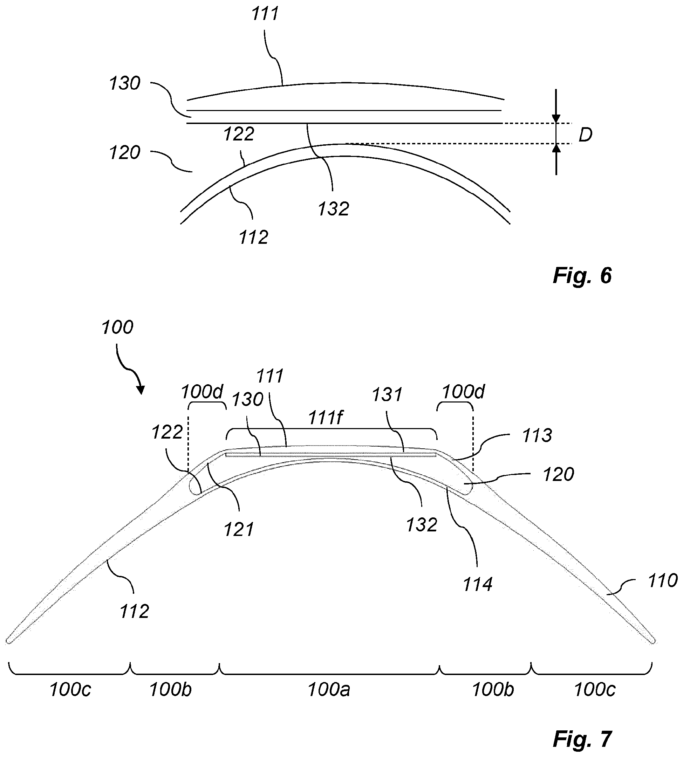

For the above reason, and to achieve satisfactory optical characteristics, the air chamber should cover the whole optical zone, implying a separation between the flat component and the posterior RGP layer at the centre of the lens. A typical separation is between 20 and 200 µm, which is advantageous for the optical performance of the lens. Figure 6 illustrates a portion of the contact lens structure 100 wherein the separation distance D between the anterior surface 122 of the posterior layer 114 and the posterior surface 132 of the flat component 130 is indicated. This separation distance D at the centre of the posterior surface 112 of the enclosure is preferably between 20 and 200 µm.

Another advantage of the contact lens structure 100 is that, because the air chamber 120 does not add mass to the resulting contact lens structure, it is possible to increase the thickness of the contact lens structure such that the flat component 130 can be embedded without adding to the overall mass of the lens, which makes the lens comfortable for the patient. A conventional scleral design, without an air chamber, would be too heavy for comfort when it embeds a large flat component.

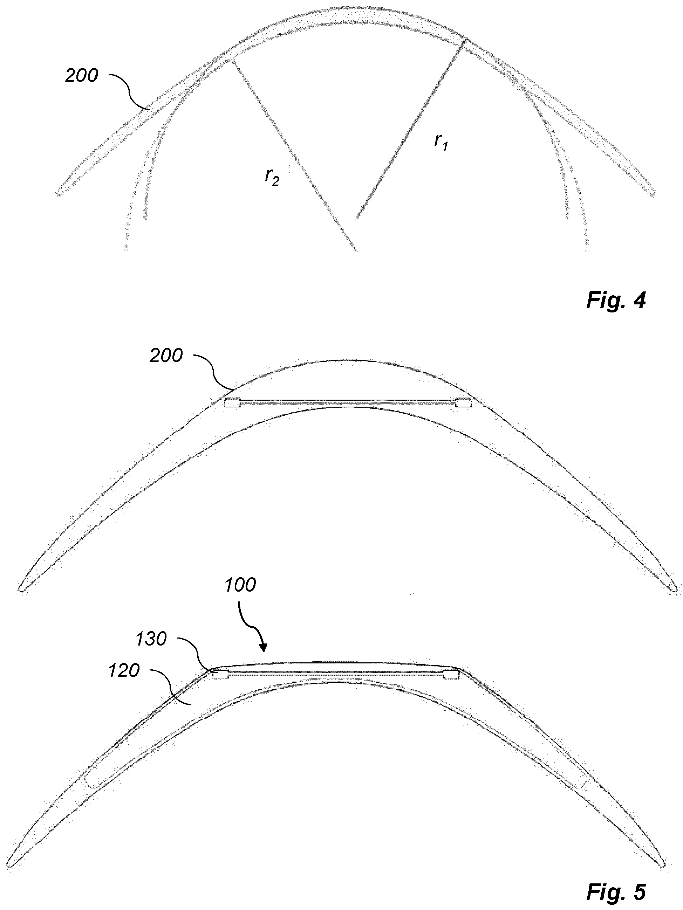

The air chamber 120 further serves as an optical material, which helps reducing the central thickness and overall mass of the scleral lens. In conventional scleral lenses, the back vertex power P of the contact lens is determined by the sum of optical power of the anterior and posterior surface, F1 and F2 respectively, with a correction factor due to the thickness t of the lens: ${F}_{1} = \frac{n - 1}{{r}_{1}}$ ${F}_{2} = \frac{1 - n}{{r}_{2}}$ $P = \frac{{F}_{1}}{1 - {F}_{1} t / n} + {F}_{2}$ n being the refractive index of the RGP material and r1 and r2 are the radii of curvature of the anterior and posterior surface, respectively (cf. Figure 4). The above equations make that r1 is close to r2. As an example, a conventional contact lens having a refractive index close to 1.45, thickness equal to 500 µm, a back vertex power of 10 D, and a back curvature r2 equal to 7.8 mm, r1 would be close to 6.75 mm (cf. Figure 4, which represents a conventional +10 D scleral lens 200, r1 and r2 are defined as the radii of curvature of the anterior and posterior central surface, respectively).

In the contact lens structure 100 of the present invention, the air chamber 120 is introduced as part of the contact lens structure 100. The optical zone 100a of the contact lens structure is a stack comprised of the anterior RGP layer 113, the flat component 130, the air chamber 120 and the posterior RGP layer 114. The back vertex power of said stack can be altered by modifying the back vertex power of the posterior RGP layer 114, which is determined by the radii of curvature of the posterior RGP surface 112 and the posterior air chamber surface 122 similarly as with a conventional scleral lens, and also by changing the radius of curvature of the anterior RGP layer 113. This allows a lot of flexibility in defining the central thickness of the scleral lens. As an example, the posterior RGP layer 114 can be considered to be afocal (without optical power), i.e. the radius of curvature of the posterior air chamber surface 122 equals a sum of the radius of curvature of the posterior RGP surface 112 and a scaled central thickness of the posterior RGP layer 114. In this case the back vertex power of the lens is solely determined by the radius of curvature of the anterior RPG layer 113 and the optical path length of the whole stack. To realize a back vertex power between -20 D and 20 D, the radius of curvature of the anterior RGP surface should be smaller than - 20 mm (negative optical powers) and larger than 20 mm (positive optical powers). This in turn allows for the central thickness of the anterior RGP layer 113 to be less than 400 µm for said optical powers. Compared to a conventional scleral lens embedding the same component, this results in a better patient comfort due to a reduced mass and reduced central thickness of the anterior RGP layer

Figure 5 shows a conventional scleral lens 200 (top image) and a scleral contact lens structure 100 (bottom image) embedding the same 7.5 mm flat component 130. The contact lens material (in this case, RGP) used in both lenses is the same. The proposed design has the air chamber 120, which is posterior to the flat component 130. Both lenses have the same posterior RGP surface, the same landing zone and provide a back vertex power of +10 D. It is appreciated the central thickness of the contact lens structure 100 is considerably smaller than that of the conventional scleral lens. Additionally, the introduction of the air chamber makes for a reduced mass of the contact lens structure, on the one hand because of the absence of material in the transition zone 100b, and on the other hand by avoiding the need for a thick anterior RGP layer in the optical zone 100a. Both the reduced central thickness and reduced overall mass increases the lens comfort to a patient.

The function of the enclosure 110, typically made of RGP material, is firstly to embed the flat component 130 and optionally the larger platform components 133. The enclosure 110 also provides the mechanical strength to the scleral contact lens. Additional functionalities are defined by the function of the anterior and posterior RGP layer.

The anterior RGP layer 113 essentially has two functions:
1. It attributes to the back vertex power of the lens, as explained above.
2. It allows for oxygen to permeate from the environment to the air chamber 120. This permeation primarily happens in the zones 100d outside the flat component 130 and where the anterior RGP layer 113 borders the air chamber 120, i.e. the permeability zone 100d. The thickness of the anterior RGP layer 113 in the permeability zone 100d follows from a trade-off between efficient oxygen permeability and mechanical strength of the complete scleral lens and is in the range of 50 µm to 500 µm.

The posterior RGP layer 114 has the following essential functions.

The posterior RGP surface 112 is made bespoke to the patient to allow a good fit with the eye. In general, the radius of curvature of the optical zone 100a, the total sagittal depth of the lens, total lens diameter and the landing zone 100c definition are chosen by a trained fitter to allow for a proper fit of the lens to the eye. Additionally, the landing zone 100c can be made toric, i.e. having different radii of curvature along two orthogonal meridians, or quadrant-specific, to allow for a better fit. In general, the central radius of curvature of the posterior surface is commonly between 6.0 mm and 10.0 mm. The total lens diameter depends largely on the embedded flat component 130 and can be between 14.5 mm and 25 mm. The variation in sagittal depth and landing zone definition depends largely on the chosen lens diameter.

Also, the posterior RGP layer 114 makes for oxygen to permeate from the air chamber 120 to the vault in between the cornea and the lens. This permeation happens along the optical zone 100a and the part of the transition zone 100b that is covering the corneal tissue. The thickness of the posterior layer 114 in these zones 100a, 100b follows from a trade-off between efficient oxygen permeability and mechanical strength of the complete scleral lens and is in the range of 50 µm to 500 µm.

Finally, the posterior RGP layer 114 can, but does not need to, contribute to the back vertex power of the lens. When choosing the radius of curvature of the posterior air chamber surface 122 such that the posterior RGP layer 114 is non-afocal, the posterior layer contributes to the back vertex power of the lens. This may help to reduce the absolute radius of curvature of the anterior RGP surface 111 to achieve a more comfortable fit to the patient. For example, in case a -20 D lens is desired, an afocal posterior RGP layer 114 results in a radius of curvature of approximately -20 mm. This concave anterior RGP surface 111 might cause discomfort to the patient. When, however, choosing the radii of curvature of the posterior RGP surface 112 and posterior air chamber surface 122 such that a -20 D optical power is achieved by the posterior RGP layer, the anterior RGP surface 111 can be chosen flat, which might be more comfortable for the patient.

Figure 7 illustrates an alternative embodiment of the compact lens structure 100 compared to the embodiment in figure 1, in which the air chamber 120 is only partly extending into the transition zone 100b, and not into the landing zone 100c. The permeability zone 100d is thereby narrower, but may still provide a desired level of air permeability into the air chamber 120.

The present disclosure is obviously not limited to the specific embodiment(s) described herein, but also encompasses any variations that may be considered by any person skilled in the art (for example, as regards the choice of materials, dimensions, components, configuration, etc.), within the general scope of the disclosure as defined in the claims.

In this text, the terms "comprises", "includes" and its derivations (such as "comprising", "including", etc.) should not be understood in an excluding sense, that is, these terms should not be interpreted as excluding the possibility that what is described and defined may include further elements, steps, etc.

## Claims

1. A contact lens structure (100) comprising:
- an enclosure (110) having an anterior layer (113) and a posterior layer (114); and
- an air chamber (120) fully located within the enclosure (110) between the anterior layer (113) and the posterior layer (114) of the enclosure (110);
**characterized in that** the contact lens structure further comprises a flat component arranged at least partly within the air chamber (120) in an optical zone (100a) of the contact lens structure (100);
wherein a back vertex power of the contact lens structure results from the optical power of the radius of curvature of at least the anterior layer (113), the posterior layer (114) and the air chamber (120);
wherein the anterior layer (113) comprises an anterior surface (111), which anterior surface (111) comprises a flat portion (101) having a radius of curvature that is in absolute value larger than 20 mm.

2. The contact lens structure (100) of claim 1, wherein the flat portion (101) extends over substantially the whole flat component.

3. The contact lens structure (100) of claim 1 or 2, wherein the flat portion (101) has a curvature with a radius larger than the radius of other parts of the anterior surface (111).

4. The contact lens structure (100) of any one of claims 1-3, wherein the contact lens structure comprises a transition zone and/or a landing zone, wherein the transition zone and/or the landing zone are zones radially outside the optical zone (100a), and wherein the flat portion (111f) of the anterior surface has a radius of curvature larger than portions of the anterior surface at the transition zone and/or landing zone.

5. The contact lens structure (100) of any one of claims 1-4, wherein the back vertex power of the contact lens structure is dependent on a curvature of the flat portion (101).

6. The contact lens structure (100) of any previous claim, wherein the flat component (130) extends over substantially the whole optical zone (100a).

7. The contact lens structure (100) of any previous claim, wherein the anterior layer has a thickness between 100 µm and 400 µm.

8. The contact lens structure (100) of claims 2 and 3, wherein the flat component (130) is arranged adjacent to the flat portion (111f).

9. The contact lens structure (100) of any one of the preceding claims, further comprising a permeability zone (100d), wherein the permeability zone is a portion of the anterior layer (113) outside the optical zone (100a).

10. The contact lens structure (100) of any previous claim, wherein the air chamber (120) is dimensioned to cover a solid angle of between 0.5*π and 0.9*π viewed from the centre of curvature of the posterior surface.

11. The contact lens structure (100) of any one of the previous claims, wherein the flat component (130) is arranged with a distance to the posterior layer (114), through the air chamber (120), at vertex of curvature of the posterior surface (112) of the posterior layer of between 20 and 200 µm.

12. The contact lens structure (100) of any previous claim, further comprising a component platform which comprises the flat component (130) and an annular component (133) arranged radially outside the flat component, and wherein at least one opening (134) is formed between the flat component (130) and the annular component (133), through which at least one opening (134) oxygen is configured to reach the air chamber (120) through the anterior layer (113).

## Patentansprüche

1. Kontaktlinsenstruktur (100), die Folgendes umfasst:
- eine Umhüllung (110), die eine anteriore Schicht (113) und eine posteriore Schicht (114) aufweist, und
- eine Luftkammer (120), die sich vollständig innerhalb der Umhüllung (110) zwischen der anterioren Schicht (113) und der posterioren Schicht (114) der Umhüllung (110) befindet,
**dadurch gekennzeichnet, dass** die Kontaktlinsenstruktur ferner eine flache Komponente umfasst, die zumindest teilweise innerhalb der Luftkammer (120) in einer optischen Zone (100a) der Kontaktlinsenstruktur (100) angeordnet ist,
wobei sich ein bildseitiger Scheitelbrechwert der Kontaktlinsenstruktur aus dem Brechwert des Krümmungsradius zumindest der anterioren Schicht (113), der posterioren Schicht (114) und der Luftkammer (120) ergibt,
wobei die anteriore Schicht (113) eine anteriore Oberfläche (111) umfasst, wobei die anteriore Oberfläche (111) einen flachen Abschnitt (101) umfasst, der einen Krümmungsradius aufweist, der in einem absoluten Wert größer als 20 mm ist.

2. Kontaktlinsenstruktur (100) nach Anspruch 1, wobei sich der flache Abschnitt (101) über im Wesentlichen die gesamte flache Komponente erstreckt.

3. Kontaktlinsenstruktur (100) nach Anspruch 1 oder 2, wobei der flache Abschnitt (101) eine Krümmung mit einem Radius, größer als der Radius anderer Teile der anterioren Oberfläche (111), aufweist.

4. Kontaktlinsenstruktur (100) nach einem der Ansprüche 1 bis 3, wobei die Kontaktlinsenstruktur eine Übergangszone und/oder eine Landezone umfasst, wobei die Übergangszone und/oder die Landezone Zonen, in Radialrichtung außerhalb der optischen Zone (100a), sind und wobei der flache Abschnitt (111f) der anterioren Oberfläche einen Krümmungsradius, größer als Abschnitte der anterioren Oberfläche bei der Übergangszone und/oder der Landezone, aufweist.

5. Kontaktlinsenstruktur (100) nach einem der Ansprüche 1 bis 4, wobei der bildseitige Scheitelbrechwert der Kontaktlinsenstruktur von einer Krümmung des flachen Abschnitts (101) abhängig ist.

6. Kontaktlinsenstruktur (100) nach einem der vorhergehenden Ansprüche, wobei sich die flache Komponente (130) über im Wesentlichen die gesamte optische Zone (100a) erstreckt.

7. Kontaktlinsenstruktur (100) nach einem der vorhergehenden Ansprüche, wobei die anteriore Oberfläche eine Dicke zwischen 100 µm und 400 µm aufweist.

8. Kontaktlinsenstruktur (100) nach Anspruch 2 und 3, wobei die flache Komponente (130) angrenzend an den flachen Abschnitt (111f) angeordnet ist.

9. Kontaktlinsenstruktur (100) nach einem der vorhergehenden Ansprüche, die ferner eine Durchlässigkeitszone (100d) umfasst, wobei die Durchlässigkeitszone ein Abschnitt der anterioren Schicht (113) außerhalb der optischen Zone (100a) ist.

10. Kontaktlinsenstruktur (100) nach einem der vorhergehenden Ansprüche, wobei die Luftkammer (120) dafür bemessen ist, einen räumlichen Winkel von zwischen 0,5*π und 0,9*π, gesehen von dem Krümmungsmittelpunkt der posterioren Oberfläche aus, abzudecken.

11. Kontaktlinsenstruktur (100) nach einem der vorhergehenden Ansprüche, wobei die flache Komponente (130) mit einer Entfernung zu der posterioren Schicht (114), durch die Luftkammer (120), bei einem Krümmungsscheitelpunkt der posterioren Oberfläche (112) der posterioren Schicht, von zwischen 20 und 200 µm angeordnet ist.

12. Kontaktlinsenstruktur (100) nach einem der vorhergehenden Ansprüche, die ferner eine Komponentenplattform umfasst, welche die flache Komponente (130) und eine ringförmige Komponente (133), die in Radialrichtung außerhalb der flachen Komponente angeordnet ist, umfasst, und wobei mindestens eine Öffnung (134) zwischen der flachen Komponente (130) und der ringförmigen Komponente (133) gebildet ist, wobei Sauerstoff dafür konfiguriert ist, durch die mindestens eine Öffnung (134) die Luftkammer (120) durch die anteriore Schicht (113) zu erreichen.

## Revendications

1. Structure de lentille de contact (100) comprenant :
- une enceinte (110) comportant une couche antérieure (113) et une couche postérieure (114) ; et
- une chambre d'air (120) située entièrement à l'intérieur de l'enceinte (110) entre la couche antérieure (113) et la couche postérieure (114) de l'enceinte (110) ;
**caractérisée en ce que** la structure de lentille de contact comprend en outre un composant plan agencé au moins partiellement à l'intérieur de la chambre d'air (120) dans une zone optique (100a) de la structure de lentille de contact (100) ;
dans laquelle la puissance frontale arrière de la structure de lentille de contact résulte de la puissance optique du rayon de courbure d'au moins la couche antérieure (113), la couche postérieure (114) et la chambre d'air (120) ;
dans laquelle la couche antérieure (113) comprend une surface antérieure (111), ladite surface antérieure (111) comprenant une portion plane (101) ayant un rayon de courbure dont la valeur absolue est supérieure à 20 mm.

2. Structure de lentille de contact (100) selon la revendication 1, dans laquelle la portion plane (101) s'étend substantiellement sur la totalité du composant plan.

3. Structure de lentille de contact (100) selon la revendication 1 ou 2, dans laquelle la portion plane (101) présente une courbure ayant un rayon supérieur au rayon d'autres parties de la surface antérieure (111).

4. Structure de lentille de contact (100) selon l'une quelconque des revendications 1 à 3, dans laquelle la structure de lentille de contact comprend une zone de transition et/ou une zone d'appui, dans laquelle la zone de transition et/ou la zone d'appui sont des zones qui se trouvent radialement à l'extérieur de la zone optique (100a), et dans laquelle la portion plane (111f) de la surface antérieure présente un rayon de courbure supérieur à celui de portions de la surface antérieure dans la zone de transition et/ou dans la zone d'appui.

5. Structure de lentille de contact (100) selon l'une quelconque des revendications 1 à 4, dans laquelle la puissance frontale arrière de la structure de lentille de contact dépend de la courbure de la portion plane (101).

6. Structure de lentille de contact (100) selon l'une quelconque des revendications précédentes, dans laquelle le composant plan (130) s'étend substantiellement sur la totalité de la zone optique (100a).

7. Structure de lentille de contact (100) selon l'une quelconque des revendications précédentes, dans laquelle la couche antérieure présente une épaisseur comprise entre 100 µm et 400 µm.

8. Structure de lentille de contact (100) selon les revendications 2 et 3, dans laquelle le composant plan (130) est agencé de manière adjacente à la portion plane (111f).

9. Structure de lentille de contact (100) selon l'une quelconque des revendications précédentes, comprenant en outre une zone de perméabilité (100d), dans laquelle la zone de perméabilité est une portion de la couche antérieure (113) située à l'extérieur de la zone optique (100a).

10. Structure de lentille de contact (100) selon l'une quelconque des revendications précédentes, dans laquelle la chambre d'air (120) est dimensionnée pour couvrir un angle solide compris entre 0,5×π et 0,9×π vu depuis le centre de courbure de la surface postérieure.

11. Structure de lentille de contact (100) selon l'une quelconque des revendications précédentes, dans laquelle le composant plan (130) est agencé à une distance de la couche postérieure (114), à travers la chambre d'air (120) et au sommet de courbure de la surface postérieure (112) de la couche postérieure, comprise entre 20 µm et 200 µm.

12. Structure de lentille de contact (100) selon l'une quelconque des revendications précédentes, comprenant en outre une plateforme de composants comprenant le composant plan (130) et un composant annulaire (133) agencé radialement à l'extérieur du composant plan, et dans laquelle au moins une ouverture (134) est formée entre le composant plan (130) et le composant annulaire (133), configurée pour que de l'oxygène atteigne la chambre d'air (120) à travers la couche antérieure (113) en traversant ladite au moins une ouverture (134).
